# EUROPÄISCHE PATENTSCHRIFT

(11) **EP 0 387 481 B1**
(45) Veröffentlichungstag und Bekanntmachung des Hinweises auf die Patenterteilung: **12.05.1993**
(21) Anmeldenummer: 90100262.6
(22) Anmeldetag: 08.01.1990
(51) Int. Cl.: G01D 5/38

(54) **Positionsmesseinrichtung**
Position measuring device
Dispositif pour mesurer la position

(30) Priorität: 14.03.1989 DE 3908254
(43) Veröffentlichungstag der Anmeldung: 19.09.1990
(73) Patentinhaber: Dr. Johannes Heidenhain GmbH, D-83292 Traunreut (DE)
(72) Erfinder: Michel, Dieter, Dipl.-Ing. (FH), D-8220 Traunstein (DE)

(56) Entgegenhaltungen:
- EP-A- 0 163 362

## Beschreibung

Die Erfindung bezieht sich auf eine Vorrichtung zum Messen der Relativlage zweier Objekte gemäß dem Oberbegriff des Anspruches 1.

Derartige Positionsmeßeinrichtungen sind in vielfältiger Weise bekannt. Als Beispiel sei die EP-B1-163362 angeführt. Dort ist eine Vorrichtung beschrieben, die nach dem sogenannten Dreigitter-Meßprinzip arbeitet. Dort ist das Maßstabgitter reflektierend ausgebildet und das Referenzgitter weist ausgewählte Charakteristika auf, die die Phasenlage der Beugungsordnungen zueinander beeinflussen.

In der Dissertation "Photoelektrische Messung der Änderung von Längen oder Winkelpositionen mit Hilfe von Beugungsgittern" von F. Hock, Universität Stuttgart 1975, ist auf den Seiten 130 und 131 die Rückmischung zweier kohärenter Teilstrahlen an einem laminaren Phasengitter dargestellt (Abb. 55) und beschrieben. Das Meßgitter ist dort jedoch nicht dargestellt. Das Phasengitter ist so ausgebildet, daß die 0. und geradzahlige Beugungsordnungen eliminiert werden.

Demgegenüber liegt der Erfindung die Aufgabe zugrunde, eine Vorrichtung zu schaffen, die einfach aufgebaut ist und möglichst viele Beugungsordnungen ausnutzt, so daß wenigstens drei phasenverschobene Signale erzeugt werden.

Diese Aufgabe wird durch eine Vorrichtung mit den Merkmalen des Anspruchs 1 gelöst.

Die Vorteile der Erfindung liegen darin, daß die Vorrichtung mit nur einem Beugungsgitter ausgestattet werden muß, was den Aufbau stark vereinfacht und die Kosten vorteilhaft beeinflußt.

Merkmale, die die erfindungsgemäße Vorrichtung vorteilhaft ausgestalten entnimmt man den abhängigen Patentansprüchen.

Anhand der in den Figuren dargestellten Ausführungsbeipiele wird die Erfindung noch näher erläutert.

Es zeigt
- Figur 1: den schematischen Aufbau einer Eingitter-Meßvorrichtung;
- Figur 2: eine Eingitter-Meßvorrichtung mit symmetrischen Beleuchtungsstrahlenbündeln;
- Figur 3: eine Eingitter-Meßvorrichtung mit unsymmetrischen Beleuchtungsstrahlenbündeln;
- Figur 4: eine Eingitter-Meßvorrichtung mit durch ein Prisma erzeugten Beleuchtungsstrahlenbündeln und
- Figur 5a,b: zwei Phasengitter.

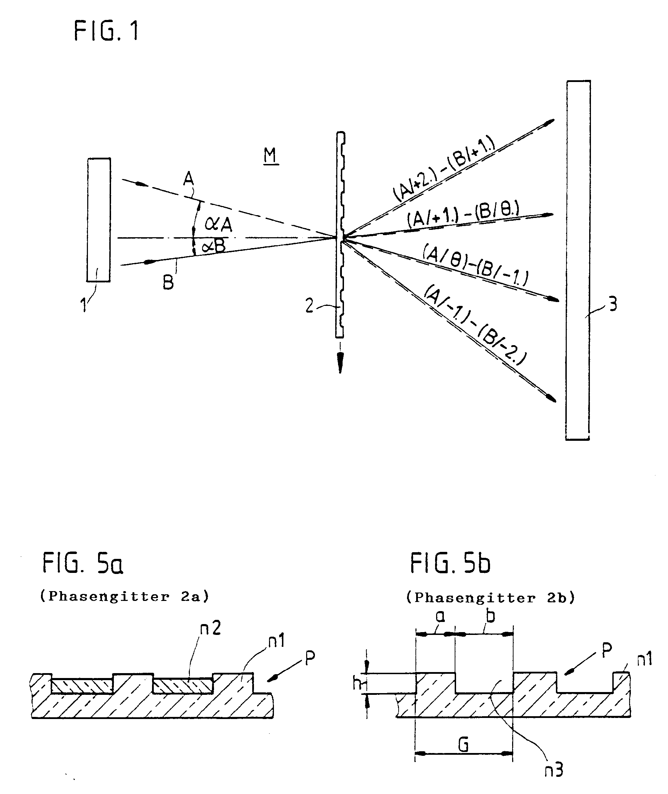

Eine in Figur 1 schematisch dargestellte Eingitter-Meßvorrichtung M weist eine Beleuchtungseinrichtung 1 auf, von der zwei interferenzfähige Strahlenbündel A und B auf ein Phasengitter 2 gerichtet werden. Die zwei Strahlenbündel A und B vereinigen sich am Phasengitter 2, werden gebeugt und interferieren nach dem Gitterdurchgang miteinander. Die gebeugten und interferierenden Teilstrahlenbündel (A/+2.) - (B/+1.), (A/+1.) - (B/0.), (A/0.) - (B/-1.), (A/-1.) - (B/-2.) treffen auf eine Detektoreinrichtung 3, die sie in zueinander phasenverschobene Meßsignale umwandelt.

Die Phasenverschiebung zwischen den Meßsignalen wird bestimmt durch die Charakteristika des Phasengitters 2 - das den Maßstab der Eingitter-Meßvorrichtung M bildet - und von den Einfallswinkeln α_{A} und α_{B} bezogen auf die Gitternormale des Phasengitters 2. Dabei können die beiden kohärenten Strahlenbündel A und B unter gleichen Winkeln α_{A} = α_{B} zur Gitternormalen auf das Phasengitter 2 treffen oder unter ungleichen Winkeln α_{A} ≠ α_{B}. Letzterer Fall ist in Figur 1 dargestellt.

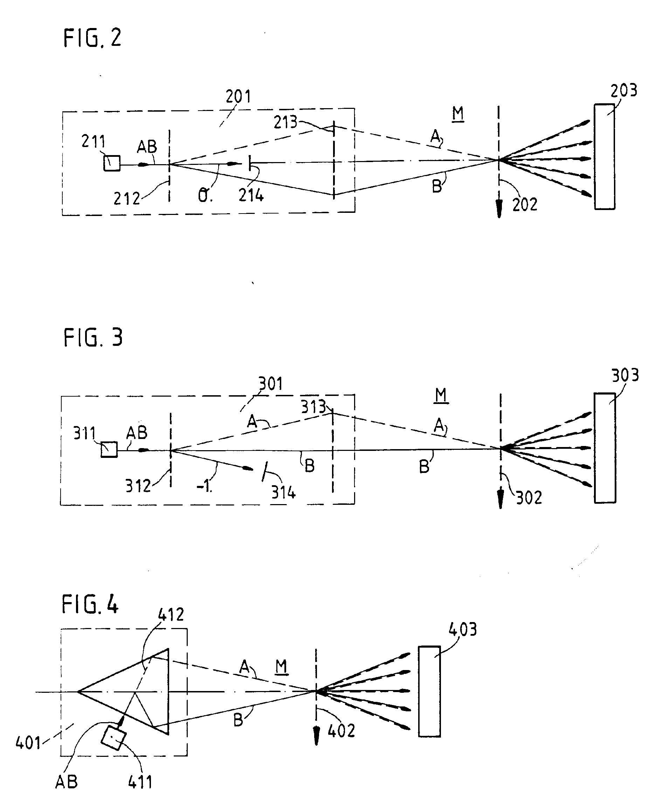

Die Einfallswinkel α_{A} und α_{B} sind letztlich davon abhängig, wie die optische Anordnung zur Erzeugung der zwei kohärenten Strahlenbündel A und B ausgebildet ist. Die Figuren 2 und 3 zeigen einmal symmetrisch einfallende Strahlenbündel A und B sowie unsymmetrisch einfallende Strahlenbündel A und B.

In Figur 2 wird mittels einer Beleuchtungseinrichtung 201 von einer Lichtquelle 211 ein Strahlenbündel AB auf ein Beugungsgitter 212 gerichtet, an dem es in Teilstrahlenbündel A und B aufgespalten wird. Die 0. Beugungsordnung wird durch eine Blende 214 ausgeblendet. An einem Umlenkgitter 213 werden die Teilstrahlenbündel A und B umgelenkt und fallen unter gleichem Einfallswinkel α_{A} = α_{B} auf ein Phasengitter 202, das den Maßstab der Eingitter-Meßvorrichtung M bildet.

Die Lichtquelle 211 kann durch einen HeNe-Gaslaser, einen Halbleiter-Laser mit einer Kollimationsoptik oder eine Lumineszenzdiode mit Kollimationsoptik gebildet werden.

An dieser Stelle muß ausdrücklich darauf hingewiesen werden, daß in den Figuren 2 und 3 Eingitter-Meßvorrichtungen gezeigt sind, obwohl mehrere Gitter vorhanden sind, weil alle Gitter außer dem Maßstab nur als optische Bausteine von Beleuchtungseinrichtungen anzusehen sind, die zwei kohärente Strahlenbündel A und B erzeugen und meßtechnisch keine Bedeutung haben.

So ist auch in Figur 3 eine Beleuchtungseinrichtung 301 dargestellt, die ein Beugungsgitter 312 aufweist, an dem zwei Teilstrahlenbündel A und B erzeugt werden. Eine Lichtquelle 311 beleuchtet mit einem Strahlenbündel AB dieses Beugungsgitter 312, an dem Teilstrahlenbündel der +1. 0. und -1. Ordnung erzeugt werden. Die -1. Beugungsordnung wird von einer Blende 314 ausgeblendet. Die +1. Ordnung wird als Teilstrahlenbündel A an einem Umlenkgitter 313 zum Maßstab 302 hin umgelenkt und dort mit dem Teilstrahlenbündel B vereinigt. Das Teilstrahlenbündel B entspricht der 0. Beugungsordnung und fällt parallel zur Gitternormalen auf den Maßstab 302. Hier liegt der Fall α_{A} ≠ α_{B} vor, wobei α_{B} = 0° ist. Nach dem Gitterdurchgang durch den als Phasengitter ausgebildeten Maßstab 302 interferieren die gebeugten Teilstrahlenbündel miteinander und werden von einer Detektoreinrichtung 303 in zueinander phasenverschobene Meßsignale umgewandelt.

Unerwünschte höhere Beugungsordnungen werden durch nicht dargestellte Blenden ausgefiltert.

Figur 4 zeigt den Fall, bei dem die Bildung der beiden kohärenten Teilstrahlenbündel A und B mit Hilfe eines modifizierten Kösters-Teilungsprismas erfolgt. Ein mittels einer Beleuchtungseinrichtung 401 von einer Lichtquelle 411 ausgehendes Strahlenbündel AB tritt in das erwähnte Prisma 412 ein und wird dort in Teilstrahlenbündel A und B zerlegt.

Unter gleichen Winkeln α_{A} und α_{B} vereinigen sich die Teilstrahlenbündel A und B am Maßstab 402, werden gebeugt und interferieren nach dem Gitterdurchtritt miteinander in der bereits mehrfach beschriebenen Weise. Eine Detektoreinrichtung 403 wandelt die miteinander interferierenden Teilstrahlenbündel in zueinander phasenverschobene Meßsignale um.

In Figur 5a und 5b sind zwei Phasengitter 2a und 2b dargestellt. Das Verhältnis von Strich- bzw. Stegbreite zu Lückenbreite weicht bei gegebener Gitterkonstante G von 1 : 1 ab. Die Phasenverschiebung wird durch die sogenannte Phasenschicht P erzeugt und ist abhängig von der Wellenlänge λ des verwendeten Lichtes. Eine mögliche Ausführungsform ist in der eingangs erwähnten EP-B1-163 362 offenbart. Diese besondere Auslegung besteht bei einem Phasengitter mit rechteckigen Profil darin, daß das Steg-/Furchenverhältnis (Tastverhältnis) a : b merklich von 1 : 1 abweicht und die Stufenhöhe h so ausgelegt ist, daß das Gitter einen deutlich von λ/2 abweichenden Phasenhub hat.

In der Furche zwischen den Stegen des Phasengitters ist bei dem Beispiel aus Figur 5a ein Medium mit dem Brechungsindex n2 enthalten, während der Rest des Phasengitters den Brechungsindex n1 hat.

Das Beispiel in Figur 5b zeigt ein Phasengitter mit dem Brechungsindex n1 während das Medium in der Furche des Gitters die Umgebungsluft ist, die den Brechungsindex n3 haben soll.

Durch die Variation der Differenzen im Brechungsindex der Phasenschicht P und/oder ihrer Dicke h sowie des Strich-Lückenverhältnisses läßt sich die Phasenschiebung der miteinander interferierenden Teilstrahlenbündel zueinander einstellen.

## Patentansprüche

1. Vorrichtung zum Messen der Relativlage zweier Objekte mit wenigstens einer Beleuchtungs- (1, 201, 301, 401) und einer Detektoreinrichtung (3, 203, 303, 403) die einem der Objekte zugeordnet sind, sowie mit einer als Beugungsgitter ausgebildeten Meßteilung (2, 202, 302, 402) am anderen Objekt, bei der wenigstens zwei interferenzfähige Strahlenbündel (A, B) am gleichen Ort am Beugungsgitter (2, 202, 302, 402) auftreffen und gebeugt werden, wobei bei geeigneter Wahl der Einfallswinkel (αA, αB) und der Gitterparameter die gebeugten Teilstrahlenbündel (A/+2.) - (B/+1.), (A/+1.) - (B/0.), (A/0.) - (B/-1.), (A/-1.) - (B/-2.) interferieren und von der Detektoreinrichtung (3, 203, 303, 403) zur Gewinnung von zueinander phasenverschobenen Signalen herangezogen werden, und bei der die Meßteilung als Phasengitter (2, 202, 302, 402) ein von 1:1 abweichendes Verhältnis von Strich- zu Lückenbreite hat, wobei diese Abweichung so gewählt ist, daß unter Berücksichtigung der Einfallswinkel (αA und αB) der interferenzfähigen Strahlenbündel (A, B) auf das Beugungsgitter (2, 202, 302, 402) sowie der Differenzen im Brechungsindex und/oder der Dicke (h) der Phasenschichten (P) des Beugungsgitters (2, 202, 302, 402) eine vorbestimmte, vom halben Betrag der Wellenlänge (λ) abweichende Phasenverschiebung der wenigstens drei phasenverschobenen Signale untereinander bewirkt.

2. Vorrichtung nach Anspruch 1, dadurch gekennzeichnet, daß die interferenzfähigen Strahlenbündel (A, B) aus getrennten Lichtquellen stammen.

3. Vorrichtung nach Anspruch 1, dadurch gekennzeichnet, daß die interferenzfähigen Strahlenbündel (A, B) kohärente Teilstrahlenbündel sind, die durch Beugung und/oder Umlenkung aus einer gemeinsamen Lichtquelle (211, 311) gewonnen werden.

4. Vorrichtung nach Anspruch 3, dadurch gekennzeichnet, daß die Lichtquelle (211, 311) Bestandteil einer Beleuchtungseinrichtung (201, 301) ist, die weitere Bestandteile wie Beugungsgitter (212, 312), Umlenkgitter (213, 313) und Blenden (214, 314) aufweist.

5. Vorrichtung nach Anspruch 1, dadurch gekennzeichnet, daß die interferenzfähigen Strahlenbündel (A, B) durch Zerlegung und Umlenkung in einem modifizierten Kösters-Teilungsprisma (412) aus einer Lichtquelle (411) gewonnen werden.

6. Vorrichtung nach Anspruch 3 oder Anspruch 5, dadurch gekennzeichnet, daß die Lichtquelle (211, 311, 411) ein HeNe-Gaslaser, ein Halbleiter-Laser mit Kollimationsoptik oder eine Lumineszenzdiode mit Kollimationsoptik ist.

## Claims

1. A device for measuring the relative position of two objects, with at least one illuminating device (1, 201, 301, 401) and detector device (3, 203, 303, 403) associated with one object and a measuring graduation (2, 202, 302, 402) formed as a diffraction grating on the other object, in which at least two bundles of rays (A, B) capable of interference impinge on the diffraction grating (2, 202, 302, 402) at the same place and are diffracted, wherein, with suitable choice of the angles of incidence (αA, αB) and the grating parameters, the diffracted bundles of rays (A/ + 2.) - (B/ + 1.), (A/ + 1.) - (B/0.), (A/0.) - (B/-1.), (A/-1.) - (B/-2.), interfere and are detected by the detector device (3, 203, 303, 403) to derive signals phase-displaced relative to one another, and in which the measuring graduation as a phase grating (2, 202, 302, 402) has a ratio of line to space width departing from 1:1, this departure being so selected that, having regard to the angles of incidence (αA and αB) of the bundles of rays capable of interference on the diffraction grating (2, 202, 302, 402) as well as the differences in the index of refraction and/or the thickness (h) of the phase layers (P) of the diffraction grating (2, 202, 302, 402), a predetermined phase shift differing from half the wavelength (λ) applies between the at least three phase-displaced signals.

2. A device according to claim 1, characterized in that the bundles of rays capable of interference (A, B) come from separate light sources.

3. A device according to claim 1, characterized in that the bundles of rays capable of interference (A, B) are coherent bundles of rays, which are derived by diffraction and/or deflection from a common light source (211, 311).

4. A device according to claim 3, characterized in that the light source (211, 311) is a component of an illuminating device (201, 301) which comprises further components, such as diffraction gratings (212, 312), deflecting gratings (213, 313) and stops (214, 314).

5. A device according to claim 1, characterized in that the bundles of rays capable of interference (A, B) are derived from one light source (411) by splitting and deflection in a modified Kösters beam-splitting prism (412).

6. A device according to claim 3 or claim 5, characterized in that the light source (211, 311, 411) is an HeNe gas laser, a semiconductor laser with collimating optics or a light emitting diode with collimating optics.

## Revendications

1. Dispositif de mesure de la position relative de deux objets comportant au moins un dispositif d'éclairage (1, 201, 301, 401) et un dispositif de détection (3, 203, 303, 403) qui sont associés à l'un des objets ainsi qu'une graduation de mesure (2, 202, 302, 402) agencée sous forme de réseau de diffraction qui est associée à l'autre objet, dispositif dans lequel au moins deux faisceaux de rayons lumineux (A, B) qui peuvent être amenés en interférence frappent en un même point le réseau de diffraction (2, 202, 302, 402) et sont diffractés, les faisceaux partiels diffractés (A/+2.) - (B/+1.), (A/+1.) - (B/0.), (A/0.) - (B/-1.), (A/-1.) - (B/-2.) étant amenés en interférence par un choix adapté de l'angle d'incidence (αA, αB) et des paramètre de réseau et étant utilisés par le dispositif de détection (3, 203, 303, 403) pour former des signaux mutuellement déphasés, et dans lequel la graduation de mesure, réalisée sous forme de réseau de phase (2, 202, 302, 402), présente un rapport repère-espace entre repères différent de 1:1, l'écart étant choisi tel que, tenant compte de l'angle d'incidence (αA et αB) sur le réseau de diffraction (2, 202, 302, 402) des faisceaux de rayons (A, B) pouvant être amenés en interférence et des différences d'indice de diffraction et/ou d'épaisseur (h) des couches de phase (P) du réseau de diffraction (2, 202, 302, 402), on obtienne un déphasage mutuel prédéterminé, s'écartant de la valeur de la demi longueur d'onde (λ), des signaux déphasés au nombre d'au moins trois.

2. Dispositif selon la revendication 1, caractérisé par le fait que les faisceaux de rayons (A, B) pouvant être amenés en interférence sont issus de sources lumineuses distinctes.

3. Dispositif selon la revendication 1, caractérisé par le fait que les faisceaux de rayons (A, B) pouvant être amenés en interférence sont des faisceaux partiels cohérents qui sont obtenus par diffraction et/ou déviation à partir d'une source lumineuse (211, 311) commune.

4. Dispositif selon la revendication 3, caractérisé par le fait que la source lumineuse (211, 311) fait partie d'un dispositif d'éclairage (201, 301) qui comporte d'autres éléments tels que réseau de diffraction (212, 312) réseau de déviation (213, 313) et diaphragmes (214, 314).

5. Dispositif selon la revendication 1, caractérisé par le fait que les faisceaux de rayons (A, B) pouvant être amenés en interférence sont obtenus à partir d'une source lumineuse (411) par division et déviation dans un prisme diviseur de Köster (412) modifié.

6. Dispositif selon la revendication 3 ou 5, caractérisé par le fait que la source lumineuse (211, 311, 411) est un laser à gaz héliumnéon, un laser à semi-conducteur pourvu d'une optique de collimation ou une diode électro-luminescente pourvue d'une optique de collimation.
